# EUROPÄISCHE PATENTANMELDUNG

(11) **EP 3 267 089 A1**
(43) Veröffentlichungstag der Anmeldung: **10.01.2018**
(21) Anmeldenummer: 17172797.7
(22) Anmeldetag: 24.05.2017
(51) Int. Cl.: F16N 7/36, F01M 1/08, F01D 25/18

(54) **ÖLVERTEILUNGSSYSTEM UND TURBOMASCHINE MIT EINEM ÖLVERTEILUNGSSYSTEM**

(30) Priorität: 28.06.2016 DE 102016111855
(71) Anmelder: Rolls-Royce Deutschland Ltd & Co KG, 15827 Blankenfelde-Mahlow (DE)
(72) Erfinder: Uhkötter, Stephan, 15827 Dahlewitz (DE)

(57) **Zusammenfassung**

Die Erfindung betrifft ein Ölverteilungssystem für ein Gehäuse (100) mit mindestens einem mit Öl (O) zu versorgenden Bauteil (101) im Inneren des Gehäuses (100), wobei durch mindestens eine Verteilvorrichtung (1) das Öl (O) in das Innere des Gehäuses (100) einbringbar ist und im Betrieb das Öl (O) durch eine Zentrifugalkraft (F_{z}) zu dem mindestens einen Bauteil (101, 201) gefördert wird, **gekennzeichnet durch** mindestens eine Dichtung, insbesondere eine Kontaktdichtung (10) oder Labyrinthdichtung zur Abdichtung des Gehäuses (100) gegenüber der Umgebung (U), wobei die mindestens eine Dichtung (10) so ausgebildet und / oder so im Ölverteilungssystem angeordnet ist, dass sie im Betrieb auf Grund der Zentrifugalkraft (F_{z}) zum Druckausgleich mindestens einen Dichtspalt (D) zur Verbindung zwischen dem Inneren des Gehäuses (100) und der Umgebung (U) freigibt. Ferner betrifft die Erfindung ein Flugzeugtriebwerk (200).

## Beschreibung

Die Erfindung betrifft ein Ölverteilungssystem mit den Merkmalen des Anspruchs 1 und eine Turbomaschine mit einem Ölverteilungssystem mit den Merkmalen des Anspruchs 12.

In Turbomaschinen, insbesondere in Flugzeugtriebwerken, wird Öl z.B. zur Schmierung von Bauteilen, zur Kühlung von Bauteilen, zur Abdichtung rotierender Bauteile und / oder zum Korrosionsschutz in oder an Getrieben und Lagern verwendet. Verteilvorrichtungen verteilen dabei das Öl auf die jeweiligen Verbraucher, wie z.B. Zahnräder, Wellenverbindungen (splines) oder Wälzlager. Für Planetengetriebe ist ein Ölverteilungssystem z.B. aus der EP 1 767 814 B1 oder dem Artikel von Krug et al., "Experimental investigation into the efficiency of an aero engine oil jet supply system", in Proceedings of the ASME Turbo Expo 2014, June 16-20, 2014, Düsseldorf *,* bekannt.

Es besteht die Aufgabe, effiziente, zuverlässige Ölverteilungssysteme zu schaffen.

Die Aufgabe wird durch ein Ölverteilungssystem mit den Merkmalen des Anspruchs 1 gelöst.

Dabei wird ein Ölverteilungssystem für ein Gehäuse mit mindestens einem mit Öl zu versorgenden Bauteil im Inneren des Gehäuses eingesetzt, wobei durch mindestens eine Verteilvorrichtung das Öl in das Innere des Gehäuses einbringbar ist und im Betrieb das Öl durch eine Zentrifugalkraft zu dem mindestens einen zu versorgenden Bauteil gefördert wird. Mindestens eine Dichtung, insbesondere eine Kontaktdichtung oder Labyrinthdichtung dient der Abdichtung des Gehäuses gegenüber der Umgebung, wobei die mindestens eine Dichtung so ausgebildet und / oder so im Ölverteilungssystem so angeordnet ist, dass sie im Betrieb auf Grund der Zentrifugalkraft zum Druckausgleich mindestens einen Dichtspalt zur Verbindung zwischen dem Inneren des Gehäuses und der Umgebung freigibt.

In einer Ausführungsform ist das mindestens eine mit Öl zu versorgende Bauteil ein Lager, ein Gleitlager, ein Wälzlager, Zahnrad und / oder eine Öldichtung.

In einer weiteren Ausführungsform ist die mindestens eine Dichtung an einem nicht-rotierenden Bauteil angeordnet und der Dichtspalt wird im Betrieb zu einem rotierenden Bauteil gebildet. Alternativ ist die mindestens eine Dichtung an einem rotierenden Bauteil angeordnet und der Dichtspalt wird im Betrieb zu einem nicht rotierenden Bauteil gebildet. Je nach der geometrischen Anordnung kann so die Dichtung durch die im Betrieb wirkende Zentrifugalkraft den Dichtspalt freigeben.

In einer Ausführungsform ist die Verteilvorrichtung für Öl radial innen und / oder außen von einem umlaufend angeordneten Einfassungselement umgeben, das im Zusammenwirken mit der mindestens einen Dichtung jeweils den Dichtspalt bildet. Das Einfassungselement kann z.B. als Ölleitelement der Ölführung dienen.

In einer weiteren Ausführungsform weist die mindestens eine Verteilvorrichtung für das Öl eine Düse oder eine Öffnung auf, wobei die Verteilvorrichtung Öl insbesondere in axialer, in radialer, in geneigter Richtung zwischen axialer und radialer Richtung oder in tangentialer Richtung sprüht. Bei einer Einsprühung in tangentialer Richtung kann das Öl bereits mit einer passenden Geschwindigkeit auf ein rotierendes Bauteil gesprüht werden.

Ferner wird in einer anderen Ausführungsform das Öl über eine Auffangvorrichtung, insbesondere Nut und / oder eine Verteilungsvorrichtung zu dem mindestens einen mit Öl zu versorgenden Bauteil gefördert. Damit kann das Öl auch zu Bereichen (z.B. Bereiche, die in axialer Richtung versetzt sind) gebracht werden, die mit Hilfe der nur radial wirkenden Zentrifugalkraft allein nicht oder schwer erreichbar sind.

In einer weiteren Ausführungsform ist das Gehäuse ein Getriebegehäuse, insbesondere für ein epizyklisches Getriebe, ein Planetengetriebe, ein Hochleistungsgetriebe für ein Turbofan-Triebwerk oder ein Lagergehäuse. Innerhalb dieser Gehäuse ist eine Ölversorgung besonders relevant.

In einer weiteren Ausführungsform ist die mindestens eine Dichtung als Radialdichtung oder Radialwellendichtung ausgebildet. Diese Arten von Dichtungen sind kostengünstig zu realisieren.

Auch kann in einer Ausführungsform das Ölverteilungssystem sich selbsteinstellende Ölversorgung mindestens eines mit Öl zu versorgenden Bauteils aufweisen. Im Betrieb kann durch die Öffnung des Dichtspaltes eine selbstjustierende Ölversorgung realisiert werden, während auf Grund der mindestens einen Dichtung im Stillstand eine Abdichtung gegenüber der Umgebung gewährleistet ist.

Die Aufgabe wird auch durch ein Flugzeugtriebwerk, insbesondere Turbofan-Triebwerk, mit den Merkmalen des Anspruchs 12 gelöst.

In Zusammenhang mit den in den Figuren dargestellten Ausführungsbeispielen wird die Erfindung erläutert. Dabei zeigt
- Fig. 1: eine schematische Darstellung eines Flugzeugtriebwerkes in Turbofan-Bauweise mit einem Planetengetriebe als Hochleistungsgetriebe;
- Fig. 2: eine schematische Ansicht eines Ölverteilungssystems aus dem Stand der Technik;
- Fig. 3: eine erste Ausführungsform eines Ölverteilungssystems mit einer Kontaktdichtung, die unter Einwirkung einer Zentrifugalkraft einen Druckausgleich herstellen kann;
- Fig. 3A: Detail des Dichtspaltes der Ausführungsform gemäß Fig. 3;
- Fig. 3B: Detail einer alternativen Ausführungsform zu Fig. 3A;
- Fig. 4: eine zweite Ausführungsform eines Ölverteilungssystems mit einer Kontaktdichtung, die unter Einwirkung einer Zentrifugalkraft einen Druckausgleich herstellen kann;
- Fig. 5: eine weitere Ausführungsform eines Ölverteilungssystems mit einer Kontaktdichtung, die unter Einwirkung einer Zentrifugalkraft einen Druckausgleich herstellen kann;
- Fig. 6A, B: eine schematische Darstellung der Einstellung des Ölniveaus.

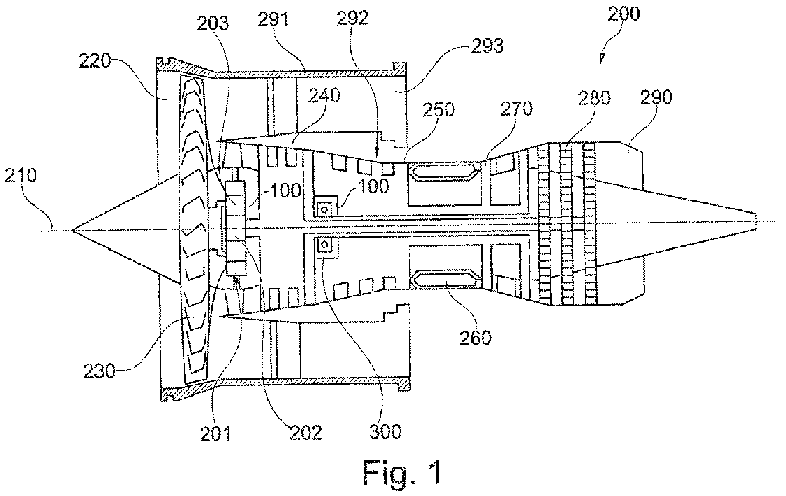

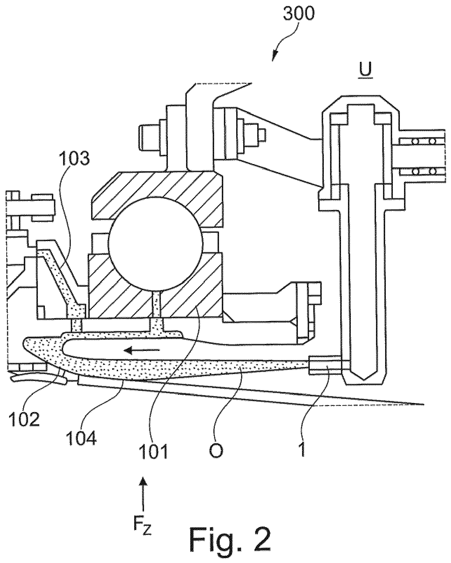

Bevor auf Einzelheiten von Ausführungsformen des Ölverteilungssystems eingegangen wird, wird zunächst im Zusammenhang mit Fig. 1 beispielhaft ein an sich bekanntes Flugzeugtriebwerk 200 in Turbofan-Bauweise mit ölverbrauchenden Bauteilen, nämlich hier einem Hochleistungsgetriebe (power gearbox) 201 und einem Kugellager 101 (siehe Fig. 2) eines Wellenlagers 300 dargestellt.

Das Flugzeugtriebwerk 200 weist dabei eine Drehachse 210 auf. In Hauptströmungsrichtung gesehen weist das Flugzeugtriebwerk 200 einen Lufteinlass 220, eine Fanstufe 230, die hier als Teil eines dahinterliegenden Niederdruckverdichters 240 aufgefasst werden kann, einen Hochdruckverdichter 250, eine Brennkammer 260, eine Hochdruckturbine 270, eine Niederdruckturbine 280 und eine Auslassdüse 290 auf. Eine Gondel (nacelle) 291 umgibt das Innere des Flugzeugtriebwerks 200 und definiert den Lufteinlass 220.

Das Flugzeugtriebwerk 200 arbeitet in an sich bekannter Weise, indem in den Lufteinlass 210 eintretende Luft durch die Fanstufe 230 beschleunigt wird, wobei zwei Luftströme erzeugt werden. Ein erster Luftstrom strömt in den Niederdruckverdichter 240 innerhalb eines Kerntriebwerks 292. Dieser Luftstrom wird dann vom Hochdruckverdichter 250 weiter verdichtet und zur Verbrennung in die Brennkammer 260 geführt. Die entstehenden heißen Verbrennungsgase werden in der Hochdruckturbine 270 und der Niederdruckturbine 280 entspannt, wobei diese über ein entsprechendes Wellensystem die Fanstufe 230, den Niederdruckverdichter 240 und den Hochdruckverdichter 250 antreiben und schließlich durch die Auslassdüse 290 austreten.

Ein zweiter Luftstrom strömt durch einen Nebenstromkanal 293, um den größten Teil des Schubs zu erzeugen.

Bei der Turbofan-Bauweise wird der Antrieb der Fanstufe 230 von der antreibenden Niederdruckturbine 280 drehzahlmäßig durch das Hochleistungsgetriebe 201 (auch power gearbox genannt) entkoppelt. Das Hochleistungsgetriebe 201 ist ein Untersetzungsgetriebe, mit dem die Drehzahl der Fanstufe 230 gegenüber der Drehzahl der Niederdruckturbine 280 gesenkt wird. Die Niederdruckturbine 280 kann so effizienter bei höheren Drehzahlen betrieben werden. Die Fanstufe 230 kann damit einen höheren Schub zur Verfügung stellen.

Das Hochleistungsgetriebe 201 kann als epizyklisches Getriebe, hier z.B. als Planetengetriebe, ausgebildet sein, das einen erheblichen Bedarf an Öl O aufweist und von einem Gehäuse 100 umgeben ist. In Fig. 1 ist schematisch ein Sonnenrad 202 und Planetenräder 203 des Hochleistungsgetriebes 201 dargestellt.

Ein weiteres Bauteil, das mit Öl O versorgt werden muss, ist ein Kugellager 101 in einem Wellenlager 300 mit einem Gehäuse 100 (siehe Fig. 2).

In anderen, hier nicht dargestellten Ausführungsformen kann das Flugzeugtriebwerk 200 einen anderen Aufbau aufweisen, z.B. indem eine andere Anzahl von Wellen verwendet wird. Auch ist es nicht zwingend, dass das Flugzeugtriebwerk 200 in Turbofan-Bauweise ausgebildet ist.

Die Ölversorgung eines Kugellagers 101 in einem Wellenlager 300 mit einem an sich bekannten Ölversorgungssystem ist in Fig. 2 dargestellt, wobei hier aus Gründen der Übersichtlichkeit kein Lagergehäuse 100 dargestellt ist. In dem Wellenlager ist ein Kugellager 101 das mit Öl O zu versorgende Bauteil.

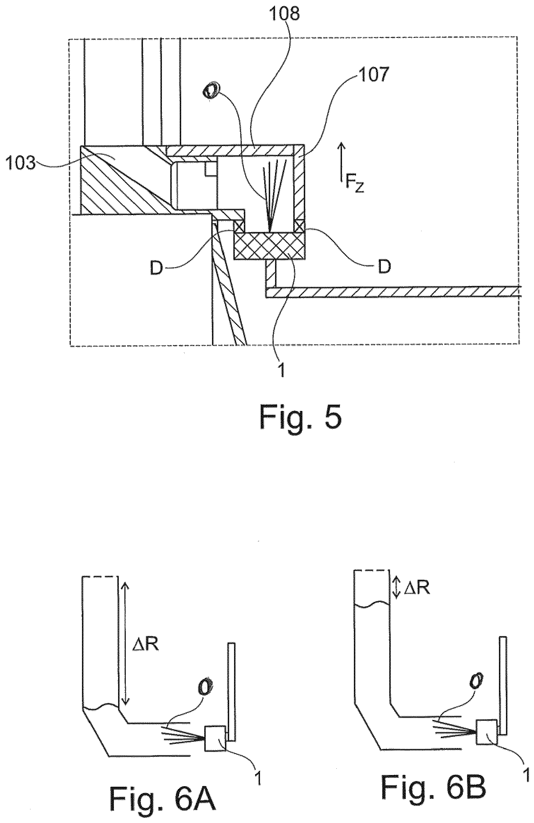

Das Öl O wird dabei aus einer Verteilvorrichtung 1, hier einer Düse, in axialer Richtung in eine Auffangvorrichtung 102 gespritzt. In alternativen Ausführungsformen kann das Einspritzen auch in radialer Richtung (siehe Fig. 5) oder unter einem Winkel (d.h. tangential oder unter einem Winkel zwischen der radialen oder axialen Richtung) erfolgen.

In Fig. 2 ist nur eine Verteilvorrichtung dargestellt. Weitere Verteilvorrichtungen sind in Umfangrichtung in bestimmten Abständen angeordnet. In alternativen Ausführungsformen können auch Öffnungen oder andere Sprühmittel als Verteilvorrichtung 1 eingesetzt werden.

Die Auffangvorrichtung 102 ist hier eine Art umlaufende Nut und rotierende Nut. Auf das Öl wirkt auf Grund der Rotation die Zentrifugalkraft F_{z}, die dafür sorgt, dass das Öl O radial nach außen (in Fig. 2 also nach oben) gedrückt wird. Dabei wird das Öl O einmal direkt in das Kugellager 101 gedrückt. Zum anderen wird das Öl O durch Verteilungsvorrichtungen 103, hier einen Kanal, zu anderen Bauteilen transportiert, die ebenfalls mit Öl O versorgt werden müssen.

Bei einer solchen Anwendung kann eine selbstjustierende Ölversorgung vorliegen, die grundsätzlich Vorteile bietet.

Innerhalb der rotierenden Auffangvorrichtung 102 und der ggf. folgenden Versorgungsleitungen 103 wird - wie beschrieben - aufgrund der Zentrifugalkraft F_{z} ein Versorgungsdruck aufgebaut.

Ein gegenüber der Umgebung U nicht abgeschlossenes System - wie in Fig. 2 dargestellt - lässt die Möglichkeit unterschiedlicher Flüssigkeitspegel im rotierenden System zu. Der Versorgungsdruck des mit Öl zu versorgenden Bauteils 101 im rotierenden System steht in Abhängigkeit des Flüssigkeitspegels (ΔR in Fig. 6A (hoher Pegelstand entsprechend hoher Druck), 6B (niedriger Pegelstand entsprechend niedriger Druck). Die Ölzufuhr, d.h. die eingespritzte Ölmenge ist dabei in der Regel konstant oder nimmt einem vorgegebenen Wert ein.

Ist der Gegendruck, also der vorherrschende Druck im Ölverbraucher und der Druckverlust bis zum Verbraucher, in einem akzeptablem Bereich, kann die Justierung durch den Flüssigkeitspegel in den rotierenden Versorgungsleitungen erfolgen.

Bei steigendem Ölvolumenstrom (d.h. steigendem Verbrauch) steigt der Versorgungsdruck und es wird mehr Öl in das Lager gedrückt; der Pegel sinkt (siehe Fig. 6B).

Im umgekehrten Fall sinkt der Versorgungsdruck bei sinkendem Volumenstrom und durch einen passend ausgelegten Gegendruck wird ein Leerlaufen des Ölsystems verhindert, so dass eine verminderte, aber kontinuierliche Ölversorgung erfolgt.

Ein solches System hat jedoch die Einschränkung, dass die Versorgung zentrifugalkraft- und damit drehzahlabhängig ist. Eine Ölversorgung der Verbraucher unter Druck im Stillstand ist damit unmöglich.

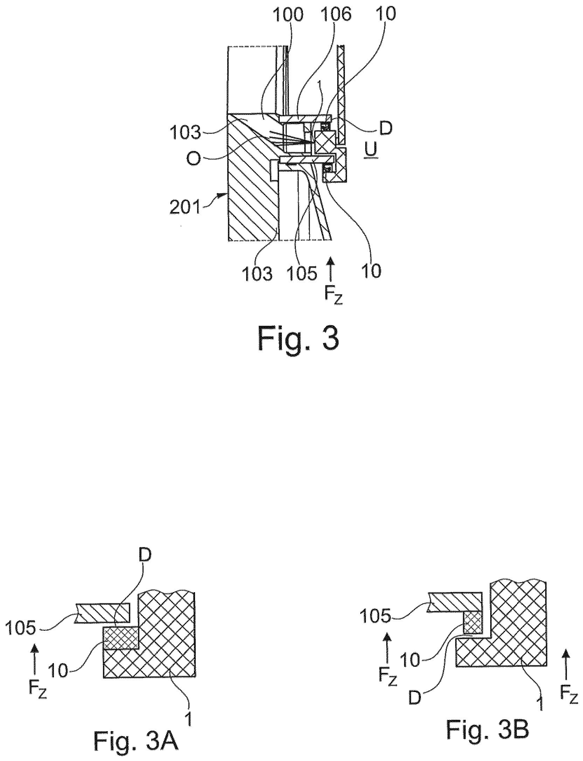

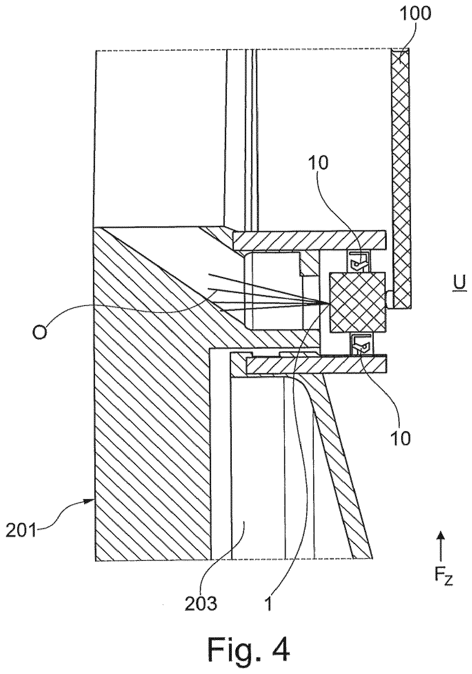

In den Fig. 3 und 4 sind Ausführungsformen von Ölverteilungssystemen im Zusammenhang mit einem Hochleistungsgetriebe 201 schematisch dargestellt. In den dargestellten Ausschnitten ist jeweils eine Ölversorgung für ein Planetengetriebe dargestellt.

Die einfach schraffierten Bauteile in den Fig. 3 und Fig. 4 sind rotierende Bauteile. Die doppelt schraffierten Bauteile in den Fig. 3 und 4 sind relativ zu den rotierenden Bauteilen ruhende Bauteile.

Zur Abdichtung des Inneren des Gehäuses 100 gegenüber der Umgebung werden hier jeweils Kontaktdichtungen 10 eingesetzt, deren Dichtwirkung aber nur unterhalb einer bestimmten Drehzahl oder im Stillstand wirksam ist. Somit kann es im Stillstand zu keinem unerwünschten Austritt von Öl O kommen.

Grundsätzlich können in dieser und auch in anderen Ausführungsformen andere Dichtungen, insbesondere auch Labyrinthdichtungen eingesetzt werden.

Der Druck des Öls O stellt sich bei einer Rotation (z.B. zwischen 50 und 1000 U/min) durch ein Gleichgewicht auf das Öl O wirkenden Zentrifugalkraft und des statischen Drucks der Flüssigkeitssäule des Öls Ö (Dichte ca. 950 kg/m³) unter der entgegenwirkenden Schwerkraft ein.

Unter hinreichend hoher Rotation, d.h. hinreichend großer Zentrifugalkraft Fz, weisen die Ölversorgungssysteme eine selbstjustierende Wirkung auf, wie im Zusammenhang mit der Fig. 2, 6a, 6b beschrieben.

Dazu wird mindestens eine Kontaktdichtung 10 zur Abdichtung des Gehäuses 100 gegenüber der Umgebung U verwendet, die so ausgebildet und / oder im Ölverteilungssystem so angeordnet ist, dass sie im Betrieb auf Grund der Zentrifugalkraft F_{z} zum Druckausgleich eine Verbindung zwischen dem Inneren des Gehäuses 100 und der Umgebung U herstellt.

In Fig. 3 und 4 ist jeweils ein Ölversorgungssystem dargestellt, bei dem eine Verteilvorrichtung 1 Öl in axialer Richtung (d.h. in den Fig. 3 und 4 nach links) einspritzt. Über eine Verteilungsvorrichtung 103 wird das Öl O in das Innere des Gehäuses 100 und damit in das Hochleistungsgetriebe 201 gebracht.

Die Verteilvorrichtung 1 ist dabei jeweils in einem umlaufend angeordneten und rotierenden Einfassungselement 105, 106 angeordnet, so dass die Öleinspritzung radial innen und außen abgeschirmt ist. Die Einfassungselemente 105, 106 sind hier ringförmige, sich in axialer Richtung erstreckende Elemente.

Gegenüber dem radial innenliegenden Einfassungselement 105 ist in Fig. 3 an dem Gehäuse der Verteilvorrichtung 1 als Dichtung eine Kontaktdichtung 10 in Form einer Radialwellendichtung angeordnet. Das Gehäuse der Verteilvorrichtung 1 ist relativ zur Kontaktdichtung 10 in Ruhe. In Ruhe (z.B. beim Stillstand) liegt die Kontaktdichtung 10 an dem inneren Einfassungselement 105 an, wie in Fig. 3 dargestellt. Unter Rotation wird das innenliegende Einfassungselement 105 auf Grund der Zentrifugalkraft F_{z} nach außen bewegt, während die Kontaktdichtung 10 in Ruhe ist. Auf Grund der radialen Bewegung des innenliegenden Einfassungselementes 105 relativ zur Kontaktdichtung 10 wird ein Dichtspalt D frei, der einen Druckausgleich zwischen der Umgebung U und dem Inneren des Gehäuses 100 ermöglicht.

Somit kann im Betrieb (d.h. unter Rotation) wieder eine selbstjustierende Ölversorgung vorliegen.

In analoger Weise ist an der außenliegenden Seite des Gehäuses der Verteilvorrichtung 1 eine Kontaktdichtung 10 angeordnet, die in Ruhe (d.h. ohne Rotation) dichtend gegen die Innenseite des radial außenliegenden Einfassungselements 106 drückt.

Unter Rotation wird das radial außenliegende Einfassungselement 106 durch die Zentrifugalkraft F_{z} nach außen gezogen und gibt somit gezielt einen Spalt für den Druckausgleich zwischen Umgebung U und dem Inneren des Gehäuses 100 frei. Der Dichtspalt D der Kontaktdichtung 10 öffnet sich unter Rotation.

In Fig. 3A ist die Kontaktdichtung 10 für das radial innenliegende Einfassungselement 105 im Detail dargestellt, nämlich für den Fall, dass die Zentrifugalkraft F_{z} das rotierende Einfassungselement 105 nach außen zieht. Damit wird der Dichtspalt D geöffnet. Eine analoge Situation ergibt sich an der Kontaktdichtung 10 für das radial außenliegende Einfassungselement 106.

In Fig. 3B ist eine Abwandlung der Ausführungsform gemäß Fig. 3A dargestellt. Auch hier wird das Einfassungselement 105 auf Grund der Zentrifugalkraft F_{z} nach außen gezogen.

Allerdings ist die Kontaktdichtung 10 nicht an der Verteilvorrichtung 1 angeordnet, sondern am rotierenden Einfassungselement 105.

In Fig. 4 ist eine Ausführungsform dargestellt, bei der die Anordnung der stillstehenden und der rotierenden Teile etwas anders ausgebildet ist. Beide Einfassungselemente 105, 106 sind rotierend ausgebildet. Eine der Kontaktdichtungen 10 ist an dem radial außenliegenden Einfassungselement 106 angeordnet, so dass sie unter der Einwirkung der Zentrifugalkraft F_{z} von dem Gehäuse der Verteilvorrichtung 1 abhebt und den Dichtspalt D freigibt. Die andere Kontaktdichtung 10 ist an dem nicht rotierenden Gehäuse der Verteilvorrichtung 1 angeordnet, so dass an dieser Stelle im Rotationsfall keine Öffnung des Dichtspaltes D erfolgt.

Somit weisen die Ausführungsformen gemäß Fig. 3 und 4 jeweils eine Kombination einer dynamischen Öldichtung und einer Kontaktdichtung auf.

In einer alternativen Ausführungsform kann auch nur eine Kontaktdichtung 10 verwendet werden, die so angeordnet ist, dass der Dichtspalt D unter Rotation geöffnet wird. In den Ausführungsbeispielen gemäß Fig. 3, 3A und 4 rotiert die Kontaktdichtung 10 nicht. Grundsätzlich ist es auch möglich, dass die Kontaktdichtung 10 mitrotiert (siehe Fig. 3B), z.B. ist sie an dem jeweils außenliegenden Teil angeordnet, so dass die Dichtung auf Grund der Zentrifugalkraft F_{z} von ihrer Dichtfläche abgehoben wird.

In Fig. 5 ist eine alternative Ausführungsform dargestellt, bei der - anders als bei den Ausführungsformen der Fig. 3 und 4 - das Öl O in radialer Richtung aus der Verteilvorrichtung 1 gespritzt wird. Rotierende Einfassungselemente 107, 108 dienen dazu das Öl O zu halten, so dass es in Richtung der Verteilungsvorrichtung 103 zu lenken. Die Einfassungselemente 107, 108 sind hier unter einem Winkel von 90° angeordnet und dienen auch zur Umlenkung des Öls O, das hier in radialer Richtung gesprüht wird. Dazu ist einer Einfassungselement 107 in radialer Richtung, das andere Einfassungselement 108 in axialer Richtung angeordnet.

Die bisherigen Ausführungsformen betrafen die Ölversorgung eines Getriebes. Alternativ können Ausführungsformen des Ölverteilungssystems auch für die Versorgung von Lagern verwendet werden.

### Bezugszeichenliste

- 1: Verteilvorrichtung, Düse

- 10: Dichtung, Kontaktdichtung

- 100: Gehäuse
- 101: mit Öl zu versorgendes Bauteil
- 102: Auffangvorrichtung für Öl
- 103: Verteilungsvorrichtung für Öl
- 104: Leitfläche, Prallfläche
- 105: radial innenliegendes Einfassungselement der Verteilvorrichtung
- 106: radial außenliegendes Einfassungselement der Verteilvorrichtung
- 107: axial ausgerichtetes Einfassungselement der Verteilvorrichtung
- 108: radial ausgerichtetes Einfassungselement der Verteilvorrichtung

- 200: Flugzeugtriebwerk
- 201: Hochleistungsgetriebe (power gearbox)
- 202: Sonnenrad
- 203: Planetenrad

- 210: Drehachse
- 220: Lufteinlass
- 230: Fanstufe
- 240: Niederdruckverdichter
- 250: Hochdruckverdichter
- 260: Brennkammer
- 270: Hochdruckturbine
- 280: Niederdruckturbine
- 290: Auslassdüse
- 291: Gondel (nacelle)
- 292: Kerntriebwerk
- 293: Nebenstromkanal

- 300: Wellenlager
- D: Dichtspalt
- F_{z}: Zentrifugalkraft
- O: Öl
- U: Umgebung

## Patentansprüche

1. Ölverteilungssystem für ein Gehäuse (100) mit mindestens einem mit Öl (O) zu versorgenden Bauteil (101) im Inneren des Gehäuses (100), wobei durch mindestens eine Verteilvorrichtung (1) das Öl (O) in das Innere des Gehäuses (100) einbringbar ist und im Betrieb das Öl (O) durch eine Zentrifugalkraft (F_{z}) zu dem mindestens einen Bauteil (101, 201) gefördert wird,
**gekennzeichnet durch**
mindestens eine Dichtung, insbesondere eine Kontaktdichtung (10) oder Labyrinthdichtung zur Abdichtung des Gehäuses (100) gegenüber der Umgebung (U), wobei die mindestens Dichtung (10) so ausgebildet und / oder so im Ölverteilungssystem angeordnet ist, dass sie im Betrieb auf Grund der Zentrifugalkraft (F_{z}) zum Druckausgleich mindestens einen Dichtspalt (D) zur Verbindung zwischen dem Inneren des Gehäuses (100) und der Umgebung (U) freigibt.

2. Ölverteilungssystem nach Anspruch 1, **dadurch gekennzeichnet, dass** das mindestens eine mit Öl zu versorgendes Bauteil (101, 201) ein Lager, ein Gleitlager, ein Wälzlager, Zahnrad und / oder eine Öldichtung ist.

3. Ölverteilungssystem nach Anspruch 1 oder 2, **dadurch gekennzeichnet, dass** die mindestens eine Dichtung (10) an einem nicht-rotierenden Bauteil (1) angeordnet ist und der Dichtspalt (D) zu einem rotierenden Bauteil (105, 106) gebildet ist.

4. Ölverteilungssystem nach Anspruch 1 oder 2, **dadurch gekennzeichnet, dass** die mindestens eine Dichtung (10) an einem rotierenden Bauteil (105, 106) angeordnet ist und der Dichtspalt (D) zu einem nicht rotierenden Bauteil (1) gebildet ist.

5. Ölverteilungssystem nach mindestens einem der vorhergehenden Ansprüche, **dadurch gekennzeichnet, dass** die Verteilvorrichtung 1 für Öl O radial innen und / oder außen von einem umlaufend angeordneten Einfassungselement (105, 106) umgeben ist, die im Zusammenwirken mit der mindestens einen Dichtung (10) jeweils den Dichtspalt (D) bildet.

6. Ölverteilungssystem nach mindestens einem der vorhergehenden Ansprüche, **dadurch gekennzeichnet, dass** die mindestens eine Verteilvorrichtung (1) für das Öl (O) eine Düse oder eine Öffnung aufweist.

7. Ölverteilungssystem nach mindestens einem der vorhergehenden Ansprüche, **dadurch gekennzeichnet, dass** die Verteilvorrichtung (1) Öl (O) in axialer, in radialer, in geneigter Richtung zwischen axialer und radialer Richtung oder in tangentialer Richtung versprüht.

8. Ölverteilungssystem nach mindestens einem der vorhergehenden Ansprüche, **dadurch gekennzeichnet, dass** das Öl (O) über eine Auffangvorrichtung (102), insbesondere Nut und / oder eine Verteilungsvorrichtung (103) zu dem mindestens einen mit Öl (O) zu versorgenden Bauteil (101, 201) gefördert wird.

9. Ölverteilungssystem nach mindestens einem der vorhergehenden Ansprüche, **dadurch gekennzeichnet, dass** das Gehäuse (100) ein Getriebegehäuse, insbesondere für ein epizyklisches Getriebe, ein Planetengetriebe, ein Hochleistungsgetriebe für ein Turbofan-Triebwerk oder ein Lagergehäuse ist.

10. Ölverteilungssystem nach mindestens einem der vorhergehenden Ansprüche, **dadurch gekennzeichnet, dass** die mindestens eine Dichtung (10) als Radialdichtung oder Radialwellendichtung ausgebildet ist.

11. Ölverteilungssystem nach mindestens einem der vorhergehenden Ansprüche, **gekennzeichnet durch** eine sich selbsteinstellende Ölversorgung mindestens eines mit Öl (O) zu versorgenden Bauteils (101, 102).

12. Flugzeugtriebwerk, insbesondere Turbofan-Triebwerk (200), mit einem Ölverteilungssystem nach mindestens einem der Ansprüche 1 bis 11.
